# DEMANDE DE BREVET EUROPEEN

(11) **EP 0 554 144 A1**
(43) Date de publication de la demande: **04.08.1993**
(21) Numéro de dépôt: 93400144.7
(22) Date de dépôt: 21.01.1993
(51) Int. Cl.: F16C 27/04

(54) **Roulement radial sans jeu perfectionné et son application à une colonne de direction d'automobile**

(30) Priorité: 31.01.1992 FR 9201121
(71) Demandeur: NADELLA, F-18102 Vierzon (FR)
(72) Inventeur: Hamel, Olivier, F-18000 Bourges (FR)
(74) Mandataire: Polus, Camille

(57) **Abrégé**

Le roulement est constitué de corps roulants (10) dans une cage (20), d'une bague (30) mince avec une surface interne (31) non-circulaire servant de chemin de roulement extérieur aux corps roulants (10) et avec une surface externe (32), et d'un manchon-gaine (40) avec une chambre intérieure (41) destinée à recevoir la surface externe (32) de la bague (30) et avec un parement extérieur (42) destiné à être placé dans un logement. Le parement extérieur (42) présente un évidement (43) extérieur périphérique en retrait situé au moins partiellement à l'aplomb de la chambre (41) de manière à délimiter, d'une part, une paroi (44) médiane radiale élastique et, d'autre part, des collets (45) d'extrémité saillants centrifuges dont la surface extérieure (451) sert de portée pour placer le manchon-gaine (40) dans le logement.

Application aux colonnes de direction.

## Description

La présente invention est relative aux roulements radiaux sans jeu et, plus particulièrement, à ceux d'entre eux aptes à subir des déplacements radiaux et/ou longitudinaux d'amplitude limitée, et à leur application notamment à des colonnes de direction d'automobiles.

Les roulements radiaux sans jeu à précontrainte sont connus. Une solution de ce type de roulement est, par exemple, exposée dans le document FR 2 426 828. Un tel roulement radial destiné à être placé dans un logement ou alésage et à recevoir un arbre ou similaire, est habituellement constitué, entre autres, de corps roulants, éventuellement montés dans une cage, d'une bague mince avec une surface interne non-circulaire servant de chemin de roulement extérieur aux corps roulants et avec une surface externe, d'un manchon-gaine ou frette avec une chambre intérieure destinée à recevoir la surface externe de la bague et avec un parement extérieur destiné à être placé dans le logement. Ce type de roulement trouve une application, notamment pour les colonnes de direction d'automobiles dont une partie d'un tronçon d'arbre sert localement par sa surface externe de chemin de roulement intérieur aux corps roulants.

Si ce type de roulements donne, pour l'essentiel, satisfaction il ne permet cependant pas tel quel et à lui seul de satisfaire à toutes les exigences de sécurité requises d'une colonne de direction. En effet, lors d'une collision frontale à composante longitudinale relativement importante, le choc brutal éventuel en retour du conducteur sur le volant, outre une déformation de ce dernier, doit entraîner un recul de la colonne de direction dans l'habitacle.

L'effort horizontal résultant du choc du conducteur sur le volant se décompose en un effort radial perpendiculaire à l'axe de la colonne et en un effort axial parallèle à l'axe de la colonne. On observe que s'il n'y a pas d'obstacle pour assurer une contre-réaction à l'effort radial, il y a arc-boutement de l'arbre de la colonne dans son support et non pas recul de celui-ci du fait qu'un roulement radial sans jeu du type précédemment indiqué n'oppose pas de résistance radiale suffisante.

Pour satisfaire aux impératifs de sécurité, il faut donc que le roulement possède à la fois une certaine rigidité radiale et autorise un certain coulissement axial.

Pour parvenir à un tel résultat avec un roulement radial sans jeu du type indiqué précédemment, il faut utiliser un manchon ou gaine servant de frette ou similaire en un matériau élastique d'une dureté importante pour obtenir la rigidité radiale et il faut alors satisfaire à des tolérances d'usinage et de montage particulièrement strictes pour maintenir l'aptitude requise au coulissement axial, ce qui est difficile a obtenir à des conditions économiques raisonnables. En effet, si l'on utilise un manchon-gaine de grande dureté de manière à obtenir la contre-réaction à l'effort radial et si le serrage de la gaine dans son logement est trop important, la bague mince non-circulaire tend à reprendre une configuration circulaire et l'effort de coulissement axial devient alors trop faible.

Pour tenter de résoudre ce type de difficulté, on a proposé d'associer à un roulement radial sans jeu du type précédemment rappelé, un anneau placé près de lui dans le support avec un jeu minime entre le diamètre intérieur de l'anneau et la diamètre extérieur du tronçon d'arbre qui lui fait face de la colonne de direction. Dans un tel cas, si un choc du conducteur se produit sur le volant, l'arbre vient buter contre l'anneau et le coulissement axial de l'arbre est possible pour autoriser un recul dans l'habitacle. On conçoit que si cette solution est théoriquement satisfaisante, elle est d'un coût économique prohibitif puisqu'il faut utiliser une pièce supplémentaire qu'il faut confectionner avec des tolérances de fabrication précises et qu'il faut mettre ensuite en place en plus du roulement.

Le but de l'invention est de remédier aux difficultés brièvement rappelées précédemment de manière à obtenir un roulement radial sans jeu qui soit apte à lui seul à la fois à subir un déplacement radial d'amplitude limitée et à autoriser un coulissement axial, sans faire appel à des conditions strictes de fabrication et de montage.

L'invention a pour objet un roulement radial sans jeu destiné à être placé dans un logement et à recevoir un arbre, qui est constitué, entre autres, de corps roulants éventuellement montés dans une cage, d'une bague mince avec une surface interne non-circulaire servant de chemin de roulement extérieur aux corps roulants et avec une surface externe, d'un manchon-gaine avec une chambre intérieure destinée à recevoir la surface externe de la bague et avec un parement extérieur destiné à être placé dans le logement. Ce roulement radial sans jeu est caractérisé en ce que ce parement extérieur présente un évidement extérieur périphérique en retrait situé au moins partiellement à l'aplomb de la chambre de manière à délimiter, d'une part, une paroi médiane radiale élastique et, d'autre part, des collets d'extrémité saillants centrifuges dont la surface extérieure sert de portée pour être placée dans le logement.

L'invention a aussi pour objet l'application d'un tel roulement notamment à une colonne de direction d'automobile dont l'arbre sert localement par une partie de sa surface externe de chemin de roulement intérieur aux corps roulants.

D'autres caractéristiques de l'invention ressortiront de la lecture de la description et des revendications qui suivent et de l'examen du dessin annexé, donné seulement à titre d'exemple, où :
- la Figure 1 est une coupe méridienne schématique partielle d'une colonne de direction d'automobile selon la technique antérieure;
- la Figure 2 est une coupe méridienne d'un mode de réalisation d'un roulement radial sans jeu selon l'invention;
- les Figures 3A et 3B sont des coupes méridienne et transversale d'une variante de réalisation d'un roulement radial sans jeu selon l'invention; et,

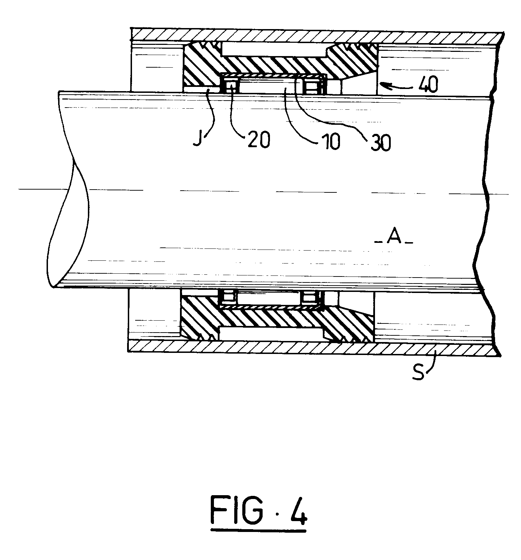

- la Figure 4 est une vue analogue à celle de la Figure 2 d'une autre variante d'exécution.

Les roulements radiaux sans jeu et leur application notamment aux colonnes de direction d'automobiles, étant bien connus dans la technique, on ne décrira dans ce qui suit que ce qui concerne directement ou indirectement l'invention. Pour le surplus, l'homme du métier du secteur considéré puisera dans les solutions classiques courantes à sa disposition pour faire face aux problèmes particuliers auxquels il est confronté.

Dans ce qui suit, on utilise toujours un même numéro de référence pour identifier un élément homologue quel que soit le mode de la réalisation ou sa variante d'exécution.

Pour la commodité de l'exposé, on décrira successivement chacun des constituants d'un roulement radial sans jeu selon l'invention avant d'en exposer au besoin la construction et la mise en oeuvre.

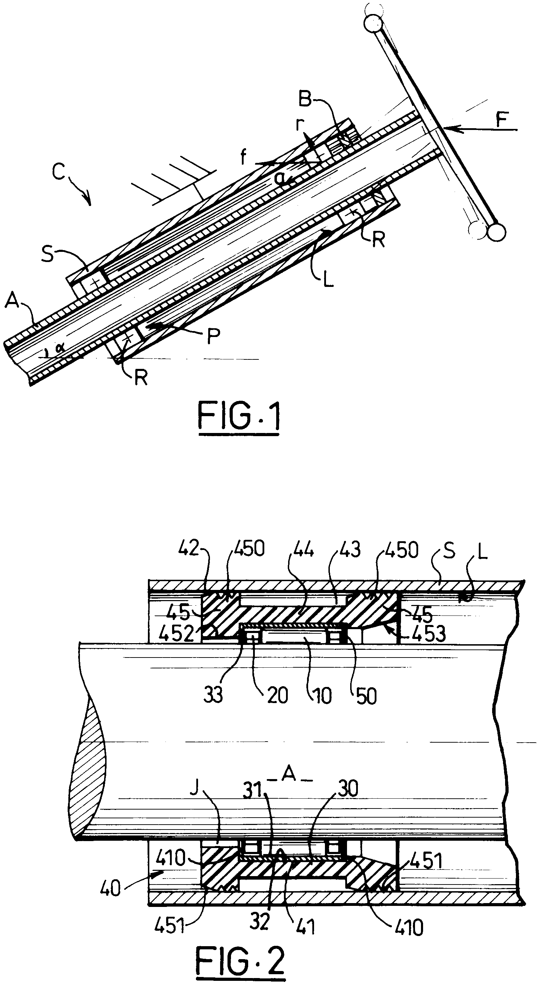

Sur la Figure 1, on a illustré schématiquement une colonne de direction d'automobile traditionnelle équipée d'au moins un roulement radial sans jeu R du type indiqué dans le document précédemment cité. Cette colonne de direction C comprend, essentiellement, un tronçon d'arbre A monté dans un support tubulaire S avec un alésage intérieur, usiné ou non, qui sert de logement L à au moins un palier P à roulement radial sans jeu R. Ce roulement R est interposé entre le support S et l'arbre A qui sert localement par une partie de sa surface externe de chemin de roulement intérieur aux corps roulants, rouleaux ou aiguilles du roulement radial.

Comme il est habituel, une telle colonne de direction est montée dans l'habitacle inclinée d'un certain angle α mesuré à partir de l'horizontal. En cas de collision frontale avec un effort à composante longitudinale importante, il n'est pas rare que le conducteur, bien que maintenu par sa ceinture de sécurité, vienne heurter violemment avec une force F le volant qui fléchit, comme indiqué en trait discontinu, avant de provoquer une déformation du tronçon d'arbre de colonne par arc-boutement, comme schématisé en trait discontinu. Si rien ne n'oppose à la composante radiale r de l'effort f, la composante axiale a n'a pas une intensité suffisante pour provoquer le recul du tronçon d'arbre dans son support. Pour faire naître une composante axiale suffisamment importante et supprimer la déformation du tronçon d'arbre par arc-boutement, on a proposé de placer à proximité des roulements radiaux R, un anneau-butée B qui assure la contre-réaction lorsque le diamètre extérieur du tronçon d'arbre rencontre le diamètre intérieur en vis-à-vis de l'anneau-butée.

C'est pour supprimer la nécessité d'utiliser un tel anneau et d'avoir recours à des tolérances d'usinage très strictes que l'on met en oeuvre un roulement radial sans jeu perfectionné selon l'invention.

Comme on le voit, un roulement radial sans jeu selon l'invention comprend, essentiellement, des corps roulants 10 tels des rouleaux ou des aiguilles éventuellement logés dans une cage 20, une bague 30 mince et un manchon-gaine 40 servant de frette.

La bague mince 30 présente une surface interne 31 non-circulaire et une surface externe 32. Cette bague mince par exemple une tôle emboutie est, s'il y a lieu, munie à l'une au moins de ses extrémités d'un rebord 33 continu ou en forme de pattes distinctes sur lequel on reviendra par la suite.

Le manchon-gaine 40 comprend une chambre 41 intérieure destinée à recevoir la surface externe 32 de la bague 30. Comme on le voit, cette chambre 41 est munie d'au moins un flanc 410 d'extrémité destiné à immobiliser axialement dans l'un au moins des deux sens opposés axiaux la bague 30. Ce manchon-gaine comprend aussi un parement 42 extérieur destiné à être placé dans un logement L. Comme on le voit, ce parement extérieur 42 présente un évidement 43 extérieur périphérique en retrait qui est situé au moins partiellement à l'aplomb de la chambre 41. De la sorte, cet évidement 43 délimite, d'une part, une paroi 44 médiane radiale élastique et, d'autre part, des collets 45 d'extrémité saillants centrifuges. La surface extérieure 451 des collets 45 sert de portée pour placer le manchon-gaine 40 dans le logement L. S'il y a lieu cette surface extérieure 451 de l'un au moins des collets 45 est munie de stries, cannelures ou similaires 450 dont le rôle sera exposé par la suite.

Comme on le voit, au moins un des collets 45 est muni d'un prolongement 452 radial centripète par exemple en couronne dont le diamètre intérieur de la surface intérieure est destiné à servir de butée radiale au diamètre extérieur de la surface externe en vis-à-vis de l'arbre comme on le comprendra par la suite. L'un au moins de ces collets 45, de préférence le collet opposé, est muni d'une entrée 453 évasée axiale, divergente vers l'extérieur, sur laquelle on reviendra par la suite.

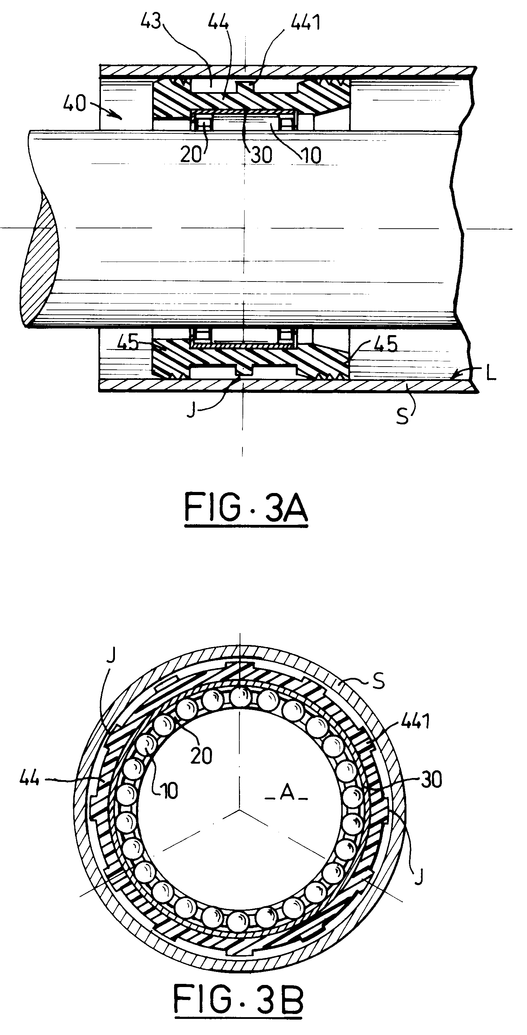

Comme on le voit pour le mode de réalisation des Figures 3A et 3B, l'évidement 43 porte des plots 441 périphériques extérieurs qui sont placés sur la paroi 44 entre les collets 45. Ces plots par exemple équidistants et régulièrement répartis sont destinés à coopérer avec le logement pour servir d'appui et limiter l'amplitude du déplacement radial de la paroi 44, comme on le comprendra par la suite.

Comme on le voit sur le mode de réalisation de la Figure 2, une rondelle 50 prend appui sur l'un des flancs 410 d'extrémité de la chambre intérieure 41 du manchon 40 de manière à y immobiliser la bague 30 et tout ce qu'elle porte. Selon une autre variante d'exécution, la rondelle 50 peut être engagée dans une gorge ménagée à l'extrémité de la chambre intérieure 41 du manchon 40 pour obtenir le même résultat. On peut alors se dispenser du flanc et l'entrée 453 évasée débouche alors directement dans la chambre sans ressaut.

Un roulement radial selon l'invention est assemblé et monté comme illustré sur les figures du dessin. On remarquera que l'entrée 453 facilite la mise en place notamment de la bague 30 et de ce qu'elle porte dans la chambre 41, par exemple par déformation élastique du collet 45 situé à son aplomb.

On observera en examinant le mode de réalisation de la Figure 2 non à l'échelle et fortement agrandie notamment en direction radiale, qu'il existe un jeu J particulièrement limité entre la surface intérieure du prolongement du collet et la partie de l'arbre située à son aplomb. On observera de même en examinant le mode de réalisation illustré sur les Figures 3A et 3B tracée dans les mêmes conditions, qu'il existe un petit jeu J entre la surface extérieure des plots 441 et la partie intérieure en regard du logement.

Le fonctionnement d'un tel roulement est le suivant. On observera que les corps roulants et la bague sont situés entre les collets du manchon pratiquement au droit de la paroi médiane.

Si maintenant un effort à composante radiale r suffisante prend naissance, on voit en examinant la Figure 2 que l'arbre A se rapproche de la surface intérieure du prolongement 452 d'au moins un des collets d'extrémité jusqu'à ce qu'il la rencontre et y bute en annulant le jeu J existant. De par ce contact la composante axiale 9 peut se manifester et provoquer un recul du tronçon d'arbre.

Pour le mode de réalisation illustré sur les Figures 3A et 3B, on voit que sous la composante radiale r de l'effort, la surface extérieure des plots 441 vient prendre appui sur la surface intérieure en regard du logement en annulant le jeu J préexistant et le roulement opère comme précédemment indiqué.

On comprend donc que, quel que soit le mode de réalisation d'un roulement radial sans jeu suivant l'invention, il subsiste toujours un jeu suffisant entre le manchon-gaine et l'arbre pour ne pas entraver une libre rotation et que le jeu initial existant entre manchon-gaine, d'une part, et arbre ou logement, d'autre part, est résorbé jusqu'à prendre une valeur nulle sous l'effet d'un déplacement radial d'amplitude limitée de manière à engendrer une composante axiale de recul provoquant une déformation de la colonne.

On observera que l'existence de l'évidement 43 extérieur périphérique en retrait situé au moins partiellement à l'aplomb de la chambre 41, fait que la bague 30 à surface interne non-circulaire et de préférence en Δ conserve sa configuration originelle et la faible épaisseur de la paroi médiane 44 permet de maîtriser les efforts de coulissements axiaux. On observera que la paroi médiane a un comportant quelque peu similaire, en section méridienne, à celui d'une poutre encastrée à ses deux extrémités.

Les stries, cannelures ou similaires 450 ménagées sur la surface extérieure de l'un au moins des collets d'extrémité permettent de s'affranchir du respect de tolérances trop strictes pour le logement sans pour autant trop resserrer le diamètre intérieur du prolongement centripète du collet.

L'entrée évasée axiale, divergente vers l'extérieur, permet le montage de la bague, notamment par déformation élastique du collet.

S'il y a lieu, la rondelle permet de maintenir la bague et ce qu'elle porte à l'intérieur du manchon-gaine.

Le choix de la nature du matériau dont est fait le manchon-gaine, le choix de l'épaisseur de la paroi et sa longueur et le choix des jeux entre prolongement ou plots d'une part, et arbre ou logement, d'autre part, sont faits de manière à permettre la déformation du manchon-gaine sans perturber le fonctionnement du roulement afin d'assurer un serrage des corps roulants sur l'arbre sans jeu.

De préférence, le manchon-gaine est fait en une matière synthétique relativement élastique. La nature du matériau, les dimensions en épaisseur et en longueur de la paroi médiane, les diamètres intérieur du logement et extérieur de l'arbre, les caractéristiques de la bague, permettent de fixer l'importance des jeux J dont il a été question précédemment, ou inversement.

Pour un mode de réalisation, on utilise pour faire le manchon-gaine un élastomère thermoplastique avec une dureté de 63 Shore D commercialisé sous la dénomination "HYTREL" par la société Dupont de Nemours. Pour la paroi médiane, on adopte une épaisseur de 2 mm et une largeur de 12,6 mm environ.

On comprend tous les avantages apportés par un roulement radial sans jeu selon l'invention en particulier pour son application à une colonne de direction d'automobile.

## Revendications

**1** **-** Roulement radial sans jeu qui est destiné à être placé dans un logement et à recevoir un arbre et qui est constitué, entre autres, de corps roulants (10) éventuellement montés dans une cage (20), d'une bague (30) mince avec une surface interne (31) servant de chemin de roulement extérieur aux corps roulants (10) et avec une surface externe (32), et d'un manchon-gaine (40) avec une chambre intérieure (41) destinée à recevoir la surface externe (32) de la bague (30) et avec un parement extérieur (42) qui est destiné à être placé dans le logement et qui présente un évidement (43) extérieur périphérique en retrait situé au moins partiellement à l'aplomb de la chambre (41) de manière à délimiter, d'une part, une paroi (44) médiane radiale élastique et, d'autre part, des collets (45) d'extrémité saillants centrifuges dont la surface extérieure (451) sert de portée pour placer le manchon-gaine (40) dans le logement et dont l'un au moins est muni d'un prolongement (452) radial centripète, roulement caractérisé en ce que la surface interne (31) est non circulaire et en ce que le prolongement radial centripète (452) est destiné à servir de butée radiale à l'arbre.

**2** **-** Roulement selon la revendication 1, caractérisé en ce que l'évidement (43) porte des plots (441) périphériques extérieurs qui sont placés sur la paroi (44) entre les collets (45) et qui sont destinés à coopérer avec le logement pour servir d'appui et limiter l'amplitude du déplacement radial de la paroi (44).

**3** **-** Roulement selon l'une quelconque des revendications 1 et 2, caractérisé en ce que au moins un des collets (45) est muni d'une entrée (453) évasée axiale divergente vers l'extérieur.

**4** **-** Roulement selon l'une quelconque des revendications 1 à 3, caractérisé en ce que la chambre (41) est munie d'au moins un flanc (410) d'extrémité destiné à immobiliser axialement la bague (30).

**5** **-** Roulement selon l'une quelconque des revendications 1 à 4, caractérisé en ce que l'évidement (43) est annulaire.

**6** **-** Roulement selon l'une quelconque des revendications 2 à 5, caractérisé en ce que les plots (441) sont équidistants.

**7** **-** Roulement selon l'une quelconque des revendications 4 à 6, caractérisé en ce que la bague (30) est munie à l'une au moins de ses extrémités d'un rebord (33) destiné à coopérer avec un flanc (410) correspondant.

**8** **-** Roulement selon l'une quelconque des revendications 1 à 7, caractérisé en ce que la surface extérieure (451) des collets (45) est munie de stries, cannelures ou similaires (450).

**9** **-** Roulement selon l'une quelconque des revendications 4 à 8, caractérisé en ce qu'il est équipé d'une rondelle (50) destinée à coopérer avec la bague (30) pour l'immobiliser axialement.

**10** **-** Roulement selon l'une quelconque des revendications 1 à 9, caractérisé en ce que le manchon-gaine (40) est fait en une matière synthétique relativement élastique.

**11** **-** Application d'un roulement conforme à l'une quelconque des revendications 1 à 10 à une colonne de direction d'automobile dont l'arbre sert localement par une partie de sa surface externe de chemin de roulement intérieur aux corps roulants.
